Europäisches Patentamt

European Patent Office

Office européen des brevets

(19)

(11) Publication number: **0 042 646**
A1

# (12) EUROPEAN PATENT APPLICATION

(21) Application number: **81200665.8**

(22) Date of filing: **12.06.81**

(51) Int. Cl.³: **B 01 D 13/00**
B 01 D 31/00, A 23 J 1/16
//C02F1/44

(30) Priority: **23.06.80 NL 8003631**

(43) Date of publication of application:
**30.12.81 Bulletin 81/52**

(84) Designated Contracting States:
**AT BE CH DE FR GB IT LI LU NL SE**

(71) Applicant: **WAVIN B.V.**
**251 Händellaan**
**NL-8031 EM Zwolle(NL)**

(72) Inventor: **Boonstra, Sye, Drs.**
**44, Bilderdijkstraat**
**NL-8031 EM Zwolle(NL)**

(74) Representative: **Mathol, Heimen et al,**
**Exterpatent 4, Willem Witsenplein**
**NL-2596 BK The Hague(NL)**

(54) **Process of concentrating substances by a membrane filtration and installation for applying said process.**

(57) A homogenized foam fluid obtained as waste fluid in processing potatoes into potato starch is subjected to a reversed osmosis by maintaining the pressure of the foam fluid upon the membrane constant at a predetermined pressure by means of centrifugal pump (9), the fluid is supplied by means of a recycle centrifugal pump (8).

An installation for executing this process comprises a reversed osmosis unit (1) and at least a centrifugal pump (9) and a recycle centrifugal pump (8).

_Fig. 1._

EP 0 042 646 A1

- 1 -

## Process of concentrating substances by a membrane filtration and installation for applying said process.

The invention relates to a process of concentrating substances by a membrane, of a fluid being compressible due to the presence of a compressiblefoam.

The invention relates more particularly to a process of concentrating solid substances, more particularly proteins, from waste water obtained in processing potatoes for manufacturing potato starch.

A process of this type in which waste water from processing potatoes into potato starch, is subjected to an ultrafiltration without any pretreatment, inclusive of foam and air bubbles as present in the waste water is very inconvenient, as such an ultrafiltration only permits a concentration up to a total dry substance ratio of approximately 8%, starting from strongly diluted waste water comprising a total dry substance ratio of about 0,7%.

When said total dry substance ratio of approximately 8% is actually obtained, both a notable decrease of the circulation velocity, a substantial decrease of the flux or of the liquid being passed through the membrane, an important decrease of the absorbed power of the circulation pump, as well as a substantial increase of the system temperature, will occur.

0042646

- 2 -

It is supposed that the latter disadvantages are a result of foam formation caused by the circulation pump, the consistency of the formed foam after having reached the total dry substance ratio of approximately 8%, being such that the circulation pump is unable to sufficiently displace the respective material and thus the pressure of the fluid upon the membrane substantially changes.

The above mentioned result is very disadvantageous as potato waste water without foam and comprising an initial dry substance ratio of 4,4%, of which 0,9% are proteins, can be concentrated by means of an ultrafiltration up to a total dry substance ratio of 20,4%, of which 15,3% consists of proteins.

It has been proposed to add silicon de foaming means, to potato waste water, but it has appeared to be very complicated in practice to predetermine the correct quantity of such defoaming means to be added, so that the aforementioned disadvantages cannot be effectively obviated. Moreover, when concentrated proteins obtained in the latter way are added to fodder, it is not only undesirable but also very expensive to act in that manner.

Said deficiencies are even more pronounced when processing an aqueous waste fluid, ontained by processing potatoes into starch by means of a homogenizing treatment. As a matter of fact waste water is obtained in that case in the form of a stable foam which waste water could not be purified by a membrane filtration, due to the presence of said foam.

The present invention aims to provide a process of the afore mentioned type which alleviates the afore described disadvantages and in which foam-containing waste water obtained by

- 3 -

processing potatoes, can be subjected directly to a membrane filtration without any pretreatment.

This object is attained according to the invention in that a predetermined pressure of the compressible fluid upon the membrane surface, is substantially maintained constant.

When such a feature is used, a foamcomprising compressible fluid may be easily directly concentrated to high dry substance ratios.

The compressible fluis id preferably supplied as a continuous fluid flow, due to which the pressure and the circulation velocity of said fluid are kept constant, whilst a rise in temperature of the fluid is also prevented.

In a very advantageous embodiment the compressible fluid consists of a waste foam obtained in processing potatoes into potato starch.

The pressure variations upon the membrane surface preferably amount to less than 10%, more preferably to less than 2% and particularly to 0,5 to 1%.

Preferably the fluid being compressible due to the presence of foam, is fed by a pump comprising an adjustable volume displacement per unit of time. A pump of this type can smoothly absorb any output changes resulting from changes in the ratio of foam density, so that the fluid compressed in such a manner that the desired operating pressure is obtained.

The process in accordance with the invention is particularly suitable for processes in which waste water, which has been

- 4 -

formed into a homogeneous foam in processing potatoes into starch, can be subjected directly to a membrane filtration, more particularly to a reverse osmosis or to a hyperfiltration, whereby pressures are exerted of about 40 atm.

The process according to the invention is effectively accomplished by means of multi-stage centrifugal pumps which can exert pressures amounting to 35 atm. and more. Although plunger pumps would be preferred due to their excellent adjustable properties, a high output and a very good applicability with respect to this type of polluting fluid flows, they cannot possibly be used in this process as they are unable to supply a continuous fluid flow.

The invention in another aspect relates to an installation for concentrating substances by a membrane filtration of a fluid being compressible due to the presence of a compressible foam, comprising a membrane filtration unit provided with an inlet and an outlet and means for exerting pressure upon the fluid during the membrane filtration, said installation being characterized in that the installation comprises means for substantially maintaining a constant predetermined pressure of the compressible fluid upon the membrane surface.

Said means preferably consists of a pump, which supplies the compressible fluid as a continuous flow and enables the latter to obtain the required working pressure, said pump particularly consisting of one or more multi-stage centrifugal pumps.

The present invention will be illustrated, by means of an embodiment as shown in the accompanying drawing, schematically showing an installation to the invention, for performing the process of the invention.

The figure shows a reversed osmosis membrane filtration unit 1, comprising tubular filtration membranes, for instance consisting of cellulose acetate. It should be noted, however, that the scope of the present invention is not limited to the use of tubular membranes.

The membrane filtration unit 1, for reverse osmosis comprises an inlet 3 and a outlet 4. The inlet 3 is through a multi-stage centrifugal pump 9 connected with a general feed line 2 for supplying homogenized waste foam, obtained in processing potatoes into potato starch which foam is kept under a pressure comprised between 1 to 2 atm. by means of a booster pump 11.

The liquid passed through the membrane which liquid may contain low molecular substances, is discharged through permeate outlet 7.

So as to concentrate solid substance, a recycling centrifugal pump 8 recycles through line 5 a part of the liquid fluid obtained from outlet 4 of the membrane filtration unit 1.

Concentrated liquid fluid, having a high solid substance ratio is passed to outlet 6, from which outlet said fluid can be conveyed via a reducing valve 10, towards a heat coagulator, for coagulating the proteins being present.

The invention will be illustrated by an example.

EXAMPLE

A membrane filtration unit 1 comprising cellulose acetate membranes, is fed with waste water in the form of foam, obtained in processing potatoes into potato starch, at a pressure of 38 atm., whereby the high pressure pump 9 in the form of a multi-stage centrifugal pump controls the continuous supply of a sufficient liquid fluid at the desired working pressure. By means of the recycle pump 8, a raise in pressure of approximately 4 atm. is moreover obtained, so that the pressure at the beginning of the operation unit 1 will amount to approximately 42 atm. Due to the pressure loss in said unit, the pressure will amount to approximately 38 atm. at the end of the former, so that the average working pressure amounts to about 40 atm.

When a repeated recycling through line 5 is performed, a concentrate discharged through outlet 6 is obtained, which concentrate comprises 8,8% by weight of a total dry substance ratio, 1,8% of which consists of proteins, starting from the foam which contained 4,5% dry substancrs. Although an increased concentration of the proteins and of the dry substance ratio involved therewith could be realized, at present it is usual that the concentration factor of proteins in potato processing waste water amount to at most 3.

When the above mentioned experiment is repeated with a plunger pump 9 during the same period of time, an increase of the dry substance ratio of only 4,5 to 4,7% is obtained.

It should be noted that the scope of the present invention is not limited to the use of a single or multi-stage centrifugal pump 9, as also a gear pump, a heating pump, a monopump having a controllable output or a turbopump or the like can be used for that aim.

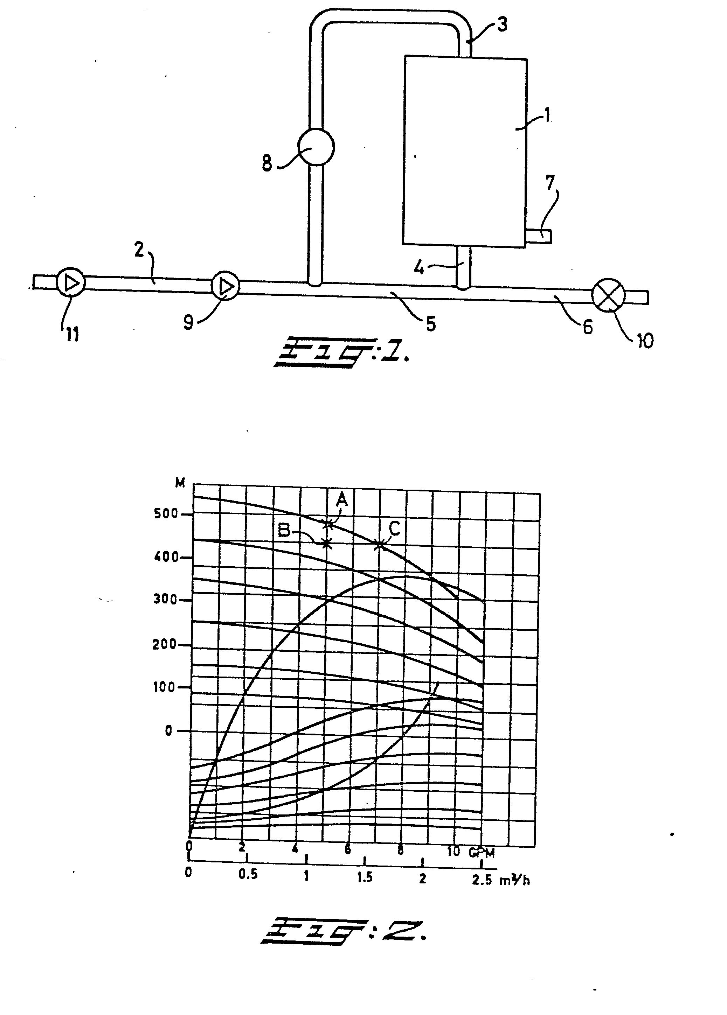

The centrifugal pumps 8 and/or 9 as applied ensure, at a predetermined position of the reduction valve 10, a continuous flow of homogenized foam. The diagram of fig. 2 shows that in operational circumstances of the centrifugal pump corresponding to point A, at a decrease of the pressure till point B, e.g. due to a change in the density of the foam, the pumped quantity of foam will automatically be increased to the value as illustrated at point C. Subsequently, the pressure having the value illustrated at point A, will be regained.

0042646

- 1 -

<u>CLAIMS</u>

1. Process of concentrating substances by a membrane filtration of a fluid being compressible due to the presence of a compressible foam, characterized in that predetermined pressure of the compressible fluid upon the membrane surface is substantially maintained constant.

2. Process according to claime 1, characterized in that the compressible fluid is supplied as a continuous fluid flow.

3. Process according to claims 1 or 2, characterized in that the compressible fluid consists of homogenized foam, preferably of a homogenized foam ontained in processing potatoes into potato starch.

4. Process according to claims 1 to 3, characterized in that the pressure variations of the fluid upon the membrane amount to less than 10%, preferably to less than 2% and more preferably to 0,5 to 1%.

5. Proces according to claims 1 to 4, characterized in that the compressible fluid is supplied by a pump having a controllable volume displacement per unit of time.

6. Process according to claims 1 to 5, characterized in that said predetermined pressure is kept constant with the aid of pumping by means of a centrifugal pump.

7. Installation for the concentration of substances by a membrane filtration of a fluid being compressible due to the presence of a compressible foam, said installation comprising a membrane filtration unit (1) provided with an inlet (3) and an outlet (4), and means (8, 9) for exerting pressure upon the

- 2 -

fluid during the membrane filtration, characterized in that the installation comprises pumping means for substantially maintaining a constant predetermined pressure of the compressible fluid upon the membrane surface.

8. Installation according to claim 7, characterized in that pumping means for maintaining a constant predetermined pressure said comprise a pump (8), which supplies the compressible fluid as a continuous fluid flow, said pump (8) being preferably a recycle centrifugal pump.

9. Installation according to claims 7 or 8, characterized in that the pump (9) is a pump having a controllable volume displacement per unit of time.

10. Installation according to claims 7 to 9, characterized in that the pump (9) for maintaining said predetermined pressure is a centrifugal pump, preferably a multi-stage centrifugal pump and/or the inlet (3) is connected with a feedline (2) for the supply of homogenized foam, preferably from potato processing for manufacturing potato starch.

FIG:1.

FIG:2.

# EUROPEAN SEARCH REPORT

**European Patent Office**

Application number

EP 81 20 0665

| Category | Citation of document with indication, where appropriate, of relevant passages | Relevant to claim |
|---|---|---|
| A | <u>US - A - 3 369 667</u> (G.B.CLARK)<br><br>* figure 4; column 3, lines 56-62 *<br><br>-- | 1 |
| A | <u>US - A - 3 756 408</u> (D.D.SPATZ) | |
| A | <u>NL - A - 73 06 558</u> (WAVIN B.V.) | |
| A | <u>DE - A - 2 542 155</u> (KON.SCHOLTEN-<u>HONIG</u>)<br><br>& GB - A - 1 520 738 | |
| A | <u>NL - A - 76 08 092</u> (WAFILIN B.V.) | |
| A | <u>DE - A - 2 627 366</u> (E.ALHAUSER)<br><br>* figure 1; page 12, lines 3-17 *<br><br>------------- | 1 |

## DOCUMENTS CONSIDERED TO BE RELEVANT

**CLASSIFICATION OF THE APPLICATION (Int. Cl.³)**

B 01 D 13/00
　　　　31/00
A 23 J　1/16//
C 02 F　1/44

**TECHNICAL FIELDS SEARCHED (Int. Cl.³)**

B 01 D 13/00
　　　　31/00
A 23 J　1/16
C 02 F　1/44

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 01.10.1981 | HOORNAERT |

EPO Form 1503.1　06.78